Europäisches Patentamt

European Patent Office

Office européen des brevets

(19)

(11) Numéro de publication: **0 120 781**

**A1**

(12) # DEMANDE DE BREVET EUROPEEN

(21) Numéro de dépôt: 84400582.7

(22) Date de dépôt: 22.03.84

(51) Int. Cl.³: **C 03 C 17/34**
**B 60 J 7/00**

(30) Priorité: 23.03.83 FR 8304736

(43) Date de publication de la demande:
03.10.84 Bulletin 84/40

(84) Etats contractants désignés:
AT BE CH DE FR GB IT LI LU NL SE

(71) Demandeur: SAINT-GOBAIN VITRAGE
Les Miroirs 18, avenue d'Alsace
F-92400 Courbevoie(FR)

(72) Inventeur: Poncelet, Denis
12 Rue Maréchal Juin
F-60150 Thourotte(FR)

(72) Inventeur: Coulon, Jean-Claude
Rue Brintet
F-71640 Mercurey(FR)

(72) Inventeur: Chaumette, Jacques
2 avenue du Moulin
F-60150 Thourotte(FR)

(72) Inventeur: Letourneur, Pierre
11 Place Porte de Champeret
F-75017 Paris(FR)

(74) Mandataire: Le Vaguerese, Sylvain Jacques et al,
SAINT-GOBAIN RECHERCHE 39, quai Lucien Lefranc
F-93304 Aubervilliers Cedex(FR)

(54) Vitrage pour toit panoramique.

(57) La présente invention concerne un vitrage pour toit panoramique de véhicules automobiles alliant des qualités de confort sur le plan lumineux et thermique.

Elle propose une feuille de verre 1 teintée dans la masse, revêtue d'un réseau de motifs émaillés, et éventuellement d'une couche mince semi-réfléchissante.

On utilise de préférence une feuille de verre teintée pour laquelle le facteur de transmission lumineuse et le facteur de transmission énergétique sont trés voisins.

FIG.1

EP 0 120 781 A1

Croydon Printing Company Ltd.

## VITRAGE POUR TOIT PANORAMIQUE

La présente invention est relative à un vitrage destiné à être utilisé notamment en tant que toit panoramique pour des véhicules automobiles.

Le toit panoramique restitue à l'intérieur du véhicule un éclairage par le haut recréant un environnement lumineux moins limité et plus conforme à celui de la nature que les toits usuels.

Afin de limiter notamment les risques d'éblouissement, et d'améliorer le confort visuel et thermique des automobilistes, un tel vitrage doit satisfaire certaines conditions : ainsi, la transmission lumineuse doit être limitée, le facteur de transmission lumineuse étant de préférence inférieur à 25 %. En outre, il est essentiel que la transmission énergétique soit également limitée, afin de ne pas créer un effet de serre.

Dans la suite du mémoire, on entend par transmission énergétique l'énergie solaire entrant par transmission directe.

Différents types de vitrage ont déjà été proposés pour être utilisés en tant que toits panoramiques et on en connaît qui satisfont partiellement les conditions requises.

On connaît par exemple un vitrage formé d'une feuille de verre teintée dans la masse et recouverte d'une mince couche semi-réfléchissante. Par cette structure, on obtient un facteur de transmission lumineuse de l'ordre de 25 % et un facteur de transmission énergétique (FET) de l'ordre de 30 %. Mais cette structure ne permet pas d'atteindre des facteurs de transmission lumineuse et énergétique encore plus faibles, d'une valeur de l'ordre de 10 à 15 % encore plus désirée pour accroître la sensation de confort. En effet en augmentant l'épaisseur de la couche semi-réfléchissante, notamment au delà de 80 nanomètres environ, on arrive effectivement à ces faibles valeurs de coefficient mais en provoquant des phénomènes d'irisation et d'interférences inacceptables.

On connait également un vitrage formé d'une feuille de verre clair recouvert d'un réseau de points émaillés qui, théoriquement, permet d'abaisser le facteur de transmission lumineuse autant que l'on désire par augmentation de la surface couverte par ces points, mais pratiquement, étant donné que le facteur de transmission énergétique est toujours supérieur au facteur de transmission lumineuse, une telle structure ne permet pas d'abaisser le facteur de transmission énergétique globale jusqu'à des valeurs inférieures à 25 %, tout en conservant un éclairage suffisant.

Les constructeurs automobiles sont de plus en plus exigeants quant aux qualités des vitrages destinés aux véhicules, notamment comme toits panoramiques, et les caractéristiques des vitrages connus ne répondent pas toujours suffisamment à ces exigences.

On s'est notamment rendu compte que le rayonnement infrarouge peut apporter des fatigues oculaires, c'est pourquoi, on a cherché à mettre au point des vitrages pour lesquels le facteur de transmission énergétique est de préférence inférieur au facteur de transmission lumineux, ou du moins pour lesquels les deux facteurs sont très proches l'un de l'autre, tout en étant suffisamment faibles pour maintenir une sensation de confort.

L'invention propose une nouvelle structure de vitrage qui tient compte de ces nouvelles exigences et rend donc le vitrage apte à une application en tant que toit panoramique pour véhicule automobile avec des propriétés améliorées.

Le vitrage selon l'invention comprend une feuille de verre teintée dans la masse, et revêtue d'un réseau de motifs émaillés, par exemple des points carrés, rectangulaires, etc., de sorte que le facteur de transmission lumineuse est inférieur à 30 %, et de préférence inférieur à 15 %, et le facteur de transmission énergétique est du même ordre de grandeur.

La nature et les propriétés du substrat constitué par la feuille de verre sont déterminantes pour l'obtention des propriétés souhaitées du vitrage. De préférence, on choisira une feuille de verre dont l'épaisseur est au plus égale à 5 mm.

Avec le vitrage selon l'invention, on peut obtenir des valeurs du facteur de transmission lumineuse de l'ordre de 20 % comme pour les vitrages antérieurs. Mais en outre, pour atteindre des valeurs faibles du facteur de transmission lumineuse, de l'ordre de 10 %, on peut agir sur la trame du réseau de motifs émaillés. On peut ainsi utiliser des réseaux dont le facteur de transmission lumineuse est compris entre 15 et 30 %.

Ainsi dans une forme préférée de l'invention, on utilise comme substrat une feuille de verre teintée dans la masse telle que décrite dans la publication de brevet français n° 2 330 556 qui présente, par exemple, un facteur de transmission lumineuse supérieur à 70 % pour une épaisseur de 3 mm et un facteur de transmission énergétique (FET) aux environs de 60 %. On dépose sur le substrat un réseau de motifs émaillés ayant un facteur de transmission lumineuse compris de préférence entre 15 et 30 %.

On obtient alors un vitrage pour toit panoramique présentant un coefficient de transmission lumineuse de l'ordre de 10 à 15 % et un coefficient de transmission énergétique de l'ordre de 10 à 15 %.

Suivant une variante de l'invention, le vitrage comprend une feuille de verre teintée dans la masse, revêtue d'un réseau de motifs émaillés, et d'une couche mince semi-réfléchissante.

Dans cette forme de réalisation, la couche semi- réfléchissante est de préférence disposée vers l'extérieur de l'habitacle et le réseau de motifs émaillés est avantageusement disposé vers l'intérieur de l'habitacle. En effet, en raison des intempéries et des abrasions auxquelles sont soumis ce type de vitrage pour véhicules, il est préférable, pour préserver les propriétés du vitrage, d'orienter le réseau vers l'intérieur de l'habitacle du véhicule.

Dans cette réalisation la couche semi-réfléchissante obtenue à partir d'une solution de composés organo-métalliques qui se transforment en oxydes métalliques sous l'action de la chaleur doit être compatible avec le réseau de motifs émaillés et notamment avec son procédé de fabrication usuel, par exemple par sérigraphie. Ainsi, selon l'invention on utilise de préférence une couche semi-réfléchissante obtenue à partir d'un mélange de composés organo-métalliques de fer, chrome, cobalt.

La couche est telle que le facteur de transmission lumineuse de la feuille de verre revêtue de la couche est inférieur à 35 %, le facteur de transmission lumineuse du réseau étant compris entre 20 et 80 %, et de préférence inférieur à 50 %.

- 4 -

0120781

Pour fabriquer un vitrage pour toit panoramique selon l'invention, éventuellement revêtu d'une couche semi-réfléchissante, on peut opérer de la façon suivante :

La feuille de verre est fabriquée par le procédé de flottation dans lequel la composition de verre fondu est déversée sur un bain métallique composé d'étain fondu sur lequel elle avance en se refroidissant progressivement pour former un ruban de verre à l'intérieur d'une enceinte protectrice. Après extraction du bain de métal fondu, le ruban de verre est soumis au dépôt de la mince couche semi-réfléchissante, par exemple par la mise en oeuvre du dispositif décrit dans la publication de brevet français 2 176 760 avec lequel on pulvérise de manière uniforme et continue sur le ruban de verre une solution de composés métalliques. Sous l'action de la chaleur du ruban de verre, ces substances métalliques se décomposent en oxydes métalliques qui forment une couche sur la surface du ruban de verre. Le ruban de verre ainsi revêtu de la couche semi-réfléchissante passe dans une étenderie où il est recuit. Il est ensuite découpé et façonné. On procède alors au dépôt du réseau opaque à partir d'une pâte pour émail connue en soi, par exemple selon les méthodes usuelles de sérigraphie et en utilisant un écran de soie. On soumet ensuite le vitrage aux opérations ultérieures courantes de réchauffage au cours duquel s'effectue la cuisson de l'émail puis de trempe et bombage du verre.

D'autres caractéristiques et avantages de l'invention apparaitront dans les exemples suivants ainsi que dans la description faite en relation avec les figures 1 à 4 :

- la figure 1 représente la structure d'un vitrage selon l'invention revêtu d'une couche semi-réfléchissante et d'un réseau de motifs émaillés,

- la figure 2 représente une variante dans laquelle un réseau de motifs émaillés est déposé sur la face opposée à celle où se trouve la couche semi-réfléchissante,

- les figures 3 et 4 représentent des exemples de trame de réseaux à base de points émaillés.

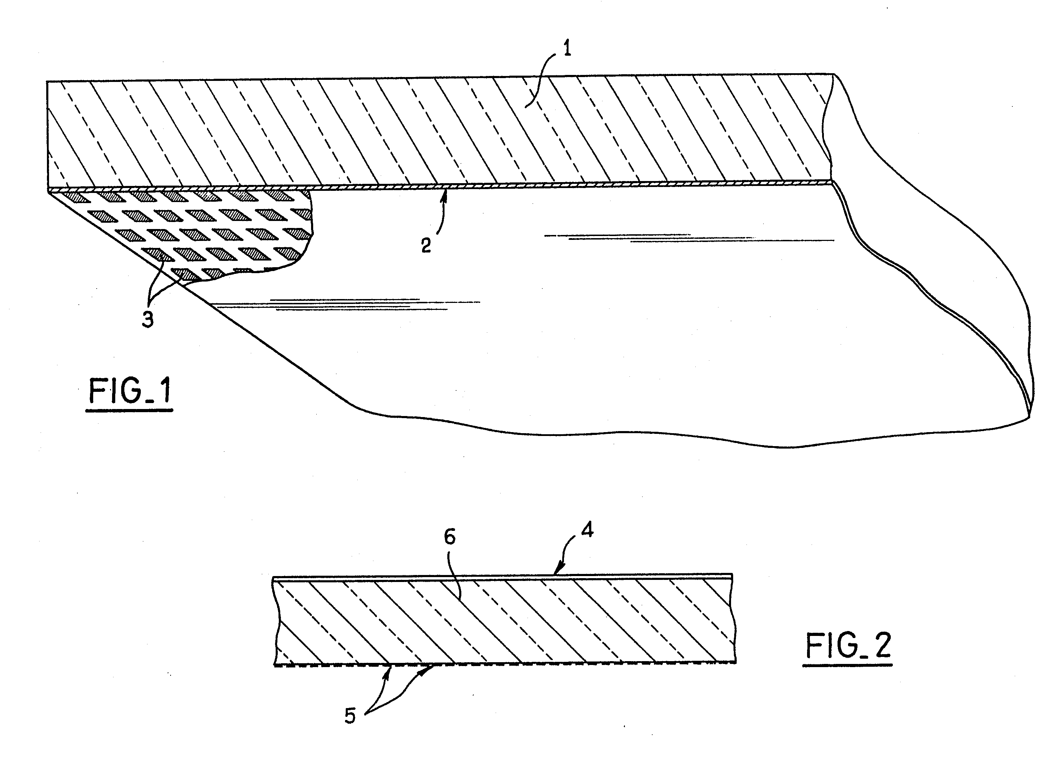

Le vitrage représenté sur la figure 1 comprend une feuille de verre 1 teintée dans la masse recouverte d'une mince couche semi-réfléchissante 2 et d'un réseau à points émaillés 3.

Dans la figure 2 une couche semi-réfléchissante 4 et le réseau de points émaillés 5 sont situés de part et d'autre d'une feuille de verre 6.

Dans ces deux réalisations, la face recouverte du réseau est toujours dirigée vers l'intérieur de l'habitacle du véhicule afin d'assurer une meilleure protection dudit réseau tandis que dans une forme particulière de l'invention, représentée à la figure 2, la couche semi-réfléchissante peut être orientée vers l'extérieur.

## EXEMPLE 1

On se place à la sortie d'une ligne de fabrication d'un verre flotté teinté dans la masse, et possédant les caractéristiques suivantes :

- épaisseur 4 mm

- facteur de transmission lumineuse (FTL) 56 %

- facteur de transmission énergétique (FET) 60 %

- facteur d'absorption énergétique : 74 %

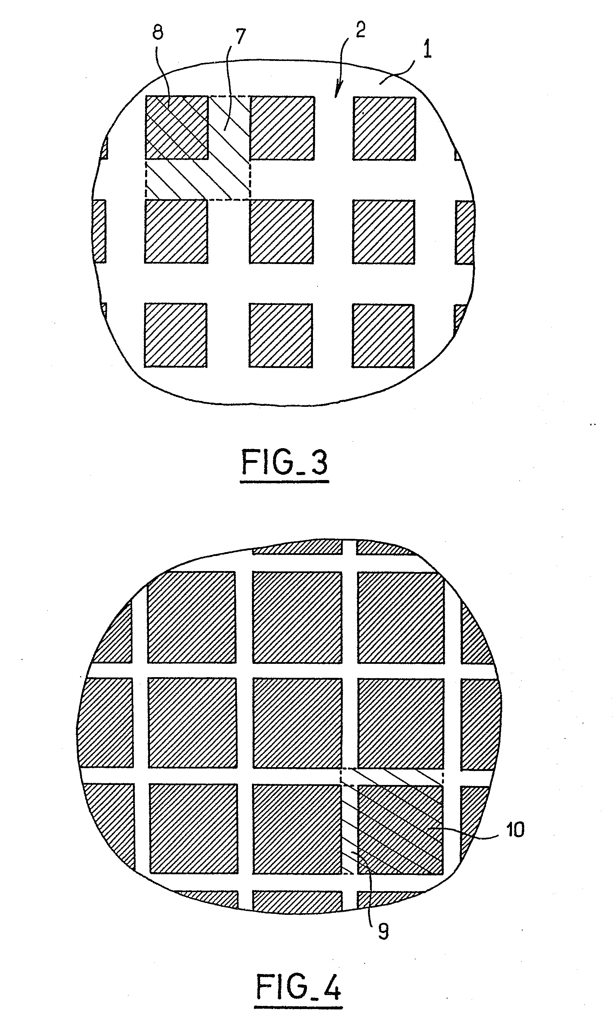

Après découpe et façonnage du verre, on dépose sur le verre une pâte d'émail, par exemple une pâte commercialisée sous l'appelation J 402 par la société H.P.C., à l'aide d'un écran de soie formant un réseau de points émaillés ayant la trame représentée à la figure 4 : le motif de répétition 9 est un carré d'environ 1100 microns de côté, comprenant un carré émaillé 10 d'environ 950 microns de côté, disposé dans le coin inférieur droit du motif de répétition. On obtient ainsi un taux de surface transparente, et donc un facteur de transmission lumineuse de 25 %.

Le vitrage obtenu présente un FTL de 14 % et un FET de 15 %.

## EXEMPLE 2

On se place à la sortie d'un bain d'étain nécessaire à la fabrication d'un verre flotté teinté dans la masse, et possédant les caractéristiques suivantes :

- épaisseur : 5 mm

- facteur de transmission lumineuse : 73 %

- facteur de transmission énergétique : 58 %

On dépose par pulvérisation une solution d'un composé organométallique de cobalt, de fer et de chrome, tel que décrit dans la publication de brevet français 2 366 230 comprenant 0,9 % en poids de cobalt, possédant un rapport en poids fer sur cobalt égal à 1,35, la somme des métaux fer, chrome, cobalt représentant 2,65 % en poids du composé organo-métallique. Le solvant utilisé est de l'acétate d'éthyle.

L'épaisseur de la couche déposée est d'environ 60 à 80 nanomètres.

Après découpe et façonnage du vitrage 1, on dépose sur la couche semi-réfléchissante 2 une pâte d'émail par exemple une pâte commercialisée sous l'appellation J 402 par la Société H.P.C., à l'aide d'un écran de soie formant un réseau de points émaillés ayant la trame représentée à la figure 3. Le motif de répétition 7 est un carré d'environ 1100 microns de côté, comprenant un carré émaillé 8 d'environ 660 microns de côté, disposé dans le coin supérieur gauche du motif de répétition. On obtient ainsi un taux de surface transparente, et donc un facteur de transmission lumineuse, de 66 %.

Le tableau suivant récapitule les caractéristiques des différents éléments du vitrage ainsi fabriqué. Les abréviations utilisées signifient :

- FTL : facteur de transmission lumineuse
- FET : facteur de transmission énergétique
- e : épaisseur

| | e | FTL | FET |
|---|---|---|---|
| feuille de verre | 5 mm | 73 % | 58 % |
| feuille de verre + couche FeCrCo | | 33 % | 35 % |
| couche FeCrCo | 60 nm | - | - |
| réseau figure 3 | | 66 % | |
| vitrage | | 24 % | 26 % |

## EXEMPLE 3

On se place dans les mêmes conditions que dans l'exemple 2 mais en utilisant le réseau représenté à la figure 4 et décrit en relation avec l'exemple 1. Le vitrage ainsi réalisé est une forme particulièrement avantageuse de l'invention puisqu'il présente les caractéristiques suivantes :

- FET : 10 %
- FTL : 10 %

REVENDICATIONS

1. Vitrage pour toit panoramique de véhicule automobile, caractérisé en ce qu'il comprend une feuille de verre teintée dans la masse, revêtue d'un réseau de motifs émaillés, et qu'il possède un facteur de transmission lumineuse inférieur à 30 %, et de préférence inférieur à 15 %, ainsi qu'un facteur de transmission énergétique de même ordre de grandeur.

2. Vitrage selon la revendication 1, caractérisé en ce que la feuille de verre présente une épaisseur au plus égale à 5 mm.

3. Vitrage selon une des revendications 1 ou 2, caractérisé en ce que le réseau de motifs émaillés possède un facteur de transmission lumineuse compris entre 15 et 30 %.

4. Vitrage selon une des revendications 1 ou 2, caractérisé en ce qu'il comprend également une couche semi-réfléchissante.

5. Vitrage selon la revendication 4, caractérisé en ce que la couche semi-réfléchissante est formée à partir d'un mélange d'organo-métalliques comprenant des composés du fer, du chrome et du cobalt.

6. Vitrage selon l'une des revendications 4 ou 5, caractérisé en ce que la feuille de verre revêtue de la couche semi-réfléchissante possède un facteur de transmission lumineuse inférieur à 35 % et le réseau de motifs émaillés un facteur de transmission lumineuse compris entre 20 et 80 %, de préférence inférieur à 50 %.

7. Vitrage selon l'une des revendications 4 à 6, caractérisé en ce que la couche semi-réfléchissante est disposée vers l'extérieur de l'habitacle du véhicule.

8. Vitrage selon l'une des revendications 4 à 7, caractérisé en ce que le réseau de motifs émaillés est déposé sur la couche semi-réfléchissante

9. Vitrage selon l'une des revendications 1 à 7, caractérisé en ce que le réseau de motifs émaillés est disposé vers l'intérieur de l'habitacle du véhicule.

FIG_1

FIG_2

## FIG_3

## FIG_4

## Office européen des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | GB-A-2 032 417 (WORLD SQUASH AND RACQUET BALL PROMOTIONS) * Page 1, lignes 25-37, 89-91, 102-105 * | 1 | C 03 C 17/34 B 60 J 7/00 |
| | --- | | |
| Y | FR-A-2 200 221 (PPG INDUSTRIES) * Revendications 1,4-6 * | 1,2,4 | |
| | --- | | |
| Y | CH-A- 440 577 (PPG COMPANY) * Exemples 7,8 * | 1,2 | |
| | --- | | |
| Y | CHEMICAL ABSTRACTS, vol. 95, no. 26, décembre 1981, page 288, no. 224332j, Columbus, Ohio, US; & JP - A - 81 84 343 (MATSUSHITA ELECTRIC WORKS, LTD.) 09-07-1981 * Résumé * | 1 | |
| | ----- | | **DOMAINES TECHNIQUES RECHERCHES (Int. Cl. ³)** |
| | | | C 03 C 17/00 |

Le présent rapport de recherche a été établi pour toutes les revendications

| Lieu de la recherche | Date d'achèvement de la recherche | Examinateur |
|---|---|---|
| LA HAYE | 29-06-1984 | BOUTRUCHE J.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82